(19) **Europäisches Patentamt / European Patent Office / Office européen des brevets**

(11) **EP 2 025 387 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(51) Int Cl.:
*B01J 45/00* (2006.01)   *C08F 8/30* (2006.01)
*C22B 3/24* (2006.01)   *C22B 3/42* (2006.01)
*C02F 1/68* (2006.01)   *C02F 101/20* (2006.01)
*C02F 103/10* (2006.01)   *B01D 53/64* (2006.01)

(21) Anmeldenummer: **08160116.3**

(22) Anmeldetag: **10.07.2008**

(54) **VERFAHREN ZUR HERSTELLUNG MONODISPERSER CHELATHARZE**

METHOD FOR PRODUCING MONODISPERSE CHELATE RESIN

PROCÉDÉ DE FABRICATION DE RÉSINES DE CHÉLATE MONODISPERSÉES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.07.2007 DE 102007034733**

(43) Veröffentlichungstag der Anmeldung:
**18.02.2009 Patentblatt 2009/08**

(73) Patentinhaber: **LANXESS Deutschland GmbH 50569 Köln (DE)**

(72) Erfinder:
• **Klipper, Reinhold 50933, Köln (DE)**
• **Schelhaas, Michael 50733, Köln (DE)**
• **Neumann, Stefan 51375, Leverkusen (DE)**
• **Zargas, Wolfgang 51069, Köln (DE)**

(56) Entgegenhaltungen:
EP-A- 0 980 711   WO-A-2007/088010
WO-A-2007/101584   DE-A1- 4 012 099
DE-A1- 19 954 393   US-A- 4 098 867

Bemerkungen:
Die Akte enthält technische Angaben, die nach dem Eingang der Anmeldung eingereicht wurden und die nicht in dieser Patentschrift enthalten sind.

EP 2 025 387 B1

**Beschreibung**

Gegenstand der vorliegenden Erfindung ist ein Verfahren zur Herstellung neuer monodisperser Chelatharze auf Basis vernetzter Perlpolymerisate mit Aminomethylgruppen und/oder Aminomethylstickstoffheterocyclengruppen die eine hohe Aufnahmekapazität für Schwermetalle und eine schnelle Kinetik besitzen.

Seit längerer Zeit werden Ionenaustauscher zur Entfernung von Wertmetallen und Schwermetallen wie, Zinn, Cobalt, Nickel, Kupfer, Zink, Blei, Uran, Wismuth, Vanadium, Elemente der Platingruppe wie Ruthenium, Osmium, Iridium, Rhodium, Palladium, Platin sowie die Edelmetalle Gold und Silber insbesondere aus wässrigen Lösungen eingesetzt. Zu diesem Zweck werden bevorzugt neben Kationen- oder Anionenaustauschern auch Chelatharze eingesetzt.

Der Einsatz von Chelatharzen zur Entfernung von Schwer- oder Wertmetallen wird beispielsweise in R. Hering, Chelatbildende Ionentauscher, Akademie Verlag, Berlin, 1967, Seiten 150 bis 157 beschrieben. Genannt werden u.a. Chelatharze mit Iminoessigsäuregruppen. Chelatharze zeigen in vielen Fällen eine deutlich höhere Selektivität für Schwermetalle als beispielsweise Kationenaustauscher mit stark sauren Sulfonsäuregruppen.

Die gebräuchlichen Ionenaustauscher nehmen Schwermetalle aus wässrigen Lösungen bei pH > 4 auf. Bei pH Werten kleiner ca. 4 nimmt die Selektivität von Chelatharzen für Schwermetalle ab, da ihre funktionellen Gruppen protoniert werden. Die Entfernung von Schwermetallen aus Lösungen oder Suspensionen mit stark sauren pH Werten im Bereich von etwa 4 bis etwa 1 ist aber von erheblichem technischen Interesse.

Zur Gewinnung von Wertmetallen werden Gesteine mit Schwefelsäure behandelt. Die Wertmetalle werden aus dem Gestein gelöst und liegen in der stark sauren Gesteins-Schwefelsäuresuspension vor. Neben den Wertmetallen enthalten die Gesteine häufig auch Eisen, das gelöst oft als Eisen 3+ Ion vorliegt. Ionenaustauscher nehmen Eisen 3+ Ionen leicht auf ohne sie aber anschließend wieder in gleichem Maß bei der Regeneration des Ionenaustauscher abzugeben. Eisenionen blockieren also die Austauschkapazität des Ionenaustauschers.

Gesucht sind Ionenaustauscher, die aus sauren Lösungen oder Suspensionen im pH Wertbereich von 4 bis etwa 1 Wertmetalle deutlich selektiver aufnehmen können als Eisenionen.

In US 4,098,867 und US 4,031,038 werden Chelatharze beschrieben, die Methylaminopyridingruppen tragen.

Sie werden hergestellt durch Halomethylierung eines Perlpolymerisates auf der Basis von Styrol und Divinylbenzol, wobei im Mittel 0,1 bis 1,0 Halomethylgruppen pro aromatischem Kern als reaktive Gruppe zur Addition der Aminomethylpyridin Chelatfunktionalität eingeführt wird.

Durch die Begrenzung des Halomethylierungsgrades des Perlpolymerisates wird auch die Menge an Aminomethylpyridingruppen im Chelatharz und damit die Austauschkapazität des Chelatharzes begrenzt.

Das in der US 4 098 867 beschriebene Halomethylierungsverfahren zur Einführung der funktionellen Gruppe hat Nachteile, die zu einer Begrenzung des Funktionalisierungsgrades führen. Die Nachteile werden in der EP-A 0 481 603 beschrieben. So tritt bei der Halomethylierung eine Nachvernetzung ein, die zu einem Verlust an Halomethylgruppen führt. Aufgrund des dadurch eintretenden Verlusts an Halomethylgruppen, die mit Aminomethylpyridinen umgesetzt werden könnten, stehen den resultierenden Chelatharzen weniger funktionelle Gruppen für die Gewinnung von Wertmetallen zur Verfügung, was deren Einsatz in der Metallurgie erheblich einschränkt. EP 980 711 betrifft ein Verfahren zur Herstellung von Selektivaustauschern mit Iminoessigsäure-Einheiten. Bei der gemäß D1 erhaltenen Selektivaustauschern handelt es sich um Chelatharze bzw. Chelataustauscher. Aufgabe der vorliegenden Erfindung war die Bereitstellung eines hochfunktionalisierten, hochkapazitiven auch bei niedrigen pH Werten stabilen Chelatharzes das Wertmetalle selbst bei Anwesenheit von Eisen Ionen aus sauren wässrigen Lösungen effektiv adsorbiert.

Lösung der Aufgabe und somit Gegenstand der vorliegenden Erfindung sind monodisperse Chelatharze mit Aminomethylgruppen und/oder Aminomethylstickstoffheterocyclengruppen als funktionelle Gruppen dadurch gekennzeichnet, dass diese unter Vermeidung einer haloalkylierten Zwischenstufe nach dem Phthalimidverfahren hergestellt werden.

Überraschenderweise wurde gefunden, dass nach dem Phthalimidverfahren hergestellte Chelataustauscher keine Nachvernetzung zeigen, wodurch ein höherer Substitutionsgrad der aromatischen Kerne mit funktionellen Gruppen und daraus resultierend eine höhere Austauschkapazität im Endprodukt erzielt wird. Darüber hinaus ist die Ausbeute an Endprodukt, bezogen auf die eingesetzten Monomere, deutlich höher als bei Endprodukten, die gemäß dem Stand der Technik hergestellt werden. Schließlich zeigen die erfindungsgemäßen Chelatharze im Vergleich zum Stand der Technik ein günstigeres kinetisches Verhalten und bessere Trennleistungen. Die vorliegende Erfindung betrifft ein Verfahren zur Herstellung monodisperser Chelatharze mit Aminomethylstickstoffheterocyclengruppen, dadurch gekennzeichnet, dass man

a) Monomertröpfchen aus wenigstens einer monovinylaromatischen Verbindung, wenigstens einer polyvinylaromatischen Verbindung und einem Initiator oder einer Initiatorkombination sowie gegebenenfalls einem Porogen zu einem monodispersen, vernetzten Perlpolymerisat umsetzt,
b) dieses monodisperse, vernetzte Perlpolymerisat mit Phthalimidderivaten amidomethyliert,

c) das amidomethylierte Perlpolymerisat zu aminomethyliertem Perlpolymerisat umsetzt und

d) das aminomethylierte Perlpolymerisat zu Chelatharze mit Aminomethylstickstoffheterocyclengruppen als funktionelle Gruppen ohne Nachvernetzung umsetzt und bei der Umsetzung mit einem Halomethylstickstoffheterocyclus ein pH-Wert im Bereich 4 bis 9 eingehalten wird.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US 4 419 245 oder WO 93/12167 beschrieben. In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen besonders bevorzugt Styrol, Vinyltoluol, Ethylstyrol, $\alpha$-Methylstyrol, Chlorstyrol, Chlormethylstyrol, Acrylsäurealkylester oder Methacrylsäurealkylester eingesetzt.

Insbesondere bevorzugt wird Styrol oder Mischungen aus Styrol mit den vorgenannten Monomeren eingesetzt.

Bevorzugte polyvinylaromatische Verbindungen im Sinne der vorliegenden Erfindung sind für Verfahrensschritt a) multifunktionelle ethylenisch ungesättigte Verbindungen, besonders bevorzugt Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Divinylbenzol ist in vielen Fällen insbesondere bevorzugt. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen in Verfahrensschritt a) mikroverkapselte Monomertröpfchen zum Einsatz, wobei für die Mikroverkapselung der Monomertröpfchen die für den Einsatz als Komplexkoazervate bekannten Materialien in Frage kommen, insbesondere Polyester, natürliche und synthetische Polyamide, Polyurethane, Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die gegebenenfalls mikroverkapselten Monomertröpfchen enthalten einen Initiator oder Mischungen von Initiatoren zur Auslösung der Polymerisation. Für das erfindungsgemäße Verfahren bevorzugt geeignete Initiatoren sind Peroxyverbindungen, besonders bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen, besonders bevorzugt 2,2'-Azo-bis(isobutyronitril) oder 2,2'-Azobis(2-methylisobutyronitril).

Die Initiatoren werden bevorzugt in Mengen von 0,05 bis 2,5 Gew.%, besonders bevorzugt 0,1 bis 1,5 Gew.%, bezogen auf die Monomeren-Mischung, angewendet.

Als weitere Zusätze in den gegebenenfalls mikroverkapselten Monomertröpfchen können gegebenenfalls Porogene verwendet werden, um im kugelförmigen Polymerisat eine makroporöse Struktur zu erzeugen. Hierfür sind organische Lösungsmittel geeignet, die das entstandene Polymerisat schlecht lösen bzw. quellen. Bevorzugt seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden. Bevorzugte Perlpolymerisate im Sinne der vorliegenden Erfindung, hergestellt durch Verfahrensschritt a), weisen eine makroporöse Struktur auf.

Als monodispers werden in der vorliegenden Anmeldung solche Perlpolymerisate oder Chelatharze bezeichnet, bei denen mindestens 90 Volumen- oder Massen-% der Teilchen einen Durchmesser besitzen, der in dem Intervall mit der Breite von + 10 % des häufigsten Durchmesser um den häufigsten Durchmesser herum liegt.

Zum Beispiel bei einem Perlpolymerisat mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Erfindungsgemäß erhält man die Monodispersität der Perlpolymerisate in Stufe a) durch Anwendung von Jetting (Verdüsungsverfahren) oder durch Saat-Zulauf-Verfahren. Beispielsweise werden solche Verfahren und daraus herzustellende monodisperse Ionenaustauscher in US-A 4,444,961, EP-A 0 046 535, US-A 4,419,245 oder WO 93/12167 beschrieben.

Die Ausbildung monodisperser, makroporöser Perlpolymerisate kann beispielsweise durch Zusatz von Inertmaterialien (Porogene) zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102, 1957; DBP 1113570, 1957).

In US-A 4,382,124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teichengröße der gegebenenfalls verkapselten Monomertröpfchen beträgt 10 - 1000 $\mu$m, vorzugsweise 100 - 1000 $\mu$m. Bei der Herstellung der monodispersen Perlpolymerisate gemäß Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten Monomertröpfchen zum kugelförmigen, monodispersen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum kugelförmigen, monodispersen, makroporösen Perlpolymerisat in Verfahrensschritt a) kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt bevorzugt 1 : 0,75 bis 1 : 20, besonders bevorzugt 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise Phthalimid oder ein Phthalimidderivat in einem Lösungsmittel gelöst und mit Formalin versetzt. Anschließend wird unter Wasserabspaltung hieraus ein Bis-(Phthalimido)ether gebildet. Der Bis-(Phthalimido)ether kann gegebenenfalls zum Phthalimidoester umgesetzt werden. Bevorzugte Phthalimidderivate im Sinne der vorliegenden Erfindung sind Phthalimid selber oder substituierte Phthalimide, beispielsweise Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt bevorzugt im Bereich von 10 bis 50 Gew.-%, besonders bevorzugt 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser (VE-Wasser) alkalifrei gewaschen.

Im Verfahrensschritt d) erfolgt die Herstellung des erfindungsgemäßen Chelatharzes durch Umsetzung des Aminomethylgruppen-haltigen monodispersen, vernetzten, vinylaromatischen Perlpolymerisates aus Schritt c) in wässriger Suspension mit Chlormethylpyridin bzw. seinem Hydrochlorid oder mit 2-Chlormethylchinolin oder 2- Chlormethylpiperidin.

Chlormethylpyridin bzw. sein Hydrochlorid kann als 2-Chlormethylpyridin, 3- Chlormethylpyridin oder 4-Chlormethylpyridin eingesetzt werden.

Als bevorzugtes Reagenz wird im Verfahrensschritt d) 2-Chlormethylpyridin Hydrochlorid, bevorzugt in wässriger Lösung, eingesetzt.

Die Umsetzung im Verfahrensschritt d) erfolgt unter Einhaltung eines pH-Wertes im Bereich von 4 bis 9, und wird bevorzugt unter Zugabe von Alkali durchgeführt, besonders bevorzugt von Kalilauge oder Natronlauge, insbesondere bevorzugt von Natronlauge. Durch Zugabe von Alkali bei der Umsetzung des Aminomethylgruppen-haltigen monodispersen, vernetzten, vinylaromatischen Grundpolymerisates aus Verfahrensschritt c) in wässriger Suspension mit Halomethylstickstoffheterocyclen, bevorzugt Picolylchlorid oder seinem Hydrochlorid, wird der pH Wert bei der Umsetzung im Bereich 4 - 9 gehalten. Bevorzugt wird der pH Wert im Bereich 6 - 8 gehalten. Im Rahmen der vorliegenden Erfindung wurde gefunden, dass der Umsetzungsgrad der genannten Umsetzung in Verfahrensschritt d) in erheblichem Maße vom bei der Umsetzung vorliegenden pH Wert der Suspension abhängt. So wird erfindungsgemäß der höchste Umsetzungsgrad und somit die höchste Ausbeute bei pH Werten von 4 - 9, bevorzugt bei pH Werten von 6 - 8, insbesondere bei pH Werten um 7 erreicht (siehe Tab. 2)

Die Umsetzung gemäß Verfahrensschritt d) erfolgt bevorzugt im Temperaturbereich von 40 bis 100°C , besonders bevorzugt im Temperaturbereich von 50 bis 80°C.

Die erfindungsgemäß hergestellten Chelatharze eignen sich zur Adsorbtion von Metallen, insbesondere Schwermetallen und Edelmetallen und ihren Verbindungen aus wässrigen Lösungen und organischen Flüssigkeiten, bevorzugt aus sauren, wässrigen Lösungen. Die erfindungsgemäß hergestellten Chelatharze eignen sich besonders zur Entfernung von Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aber auch aus flüssigen oder gasförmigen Kohlenwasserstoffen, Carbonsäuren wie Adipinsäure, Glutarsäure oder Bernsteinsäure, Erdgasen, Erdgaskondensaten, Erdölen oder Halogenkohlenwasserstoffen, wie Chlor- oder Fluorkohlenwasserstoffen oder Fluor/Chlor-Kohlenwasserstoffen. Darüber hinaus eignen sich die erfindungsgemäßen Chelatharze zur Entfernung von Erdalkalimetallen aus Solen, wie sie üblicherweise in der Alkalichloridelektrolyse eingesetzt werden. Die erfindungsgemäßen Chelatharze eignen sich aber auch zur Entfernung von Schwermetallen, insbesondere Eisen, Cadmium oder Blei aus Stoffen die während einer elektrolytischen Behandlung, beispielsweise einer Dimerisierung von Acrylnitril zu Adiponitril, umgesetzt werden.

Ganz besonders geeignet sind die erfindungsgemäß hergestellten Chelatharze zur Entfernung von Quecksilber, Eisen, Cobalt, Nickel, Kupfer, Zink, Blei, Cadmium, Mangan, Uran, Vanadium, Elementen der Platingruppe sowie Gold oder Silber aus den oben aufgeführten Lösungen, Flüssigkeiten oder Gasen.

Insbesondere eignen sich die erfindungsgemäßen Chelatharze zur Entfernung von Rhodium oder Elementen der Platingruppe sowie Gold, Silber oder Rhodium oder Edelmetall-enthaltende Katalysatorreste aus organischen Lösungen oder Lösemitteln.

Neben der Metallurgie zur Gewinnung von Wertmetallen eignen sich die monodispersen Chelatharze mit Aminomethylstickstoffheterocyclengruppen hervorragend für verschiedenste Einsatzgebiete in der chemischen Industrie, der Elektronik-Industrie, der Abfall-Entsorgungs/Verwertungs-Industrie oder der Galvano- oder Oberflächentechnik.

**Untersuchungsmethoden**

Bestimmung der Menge an basischen Aminomethylstickstoffheterocyclen gruppen im vernetzten Polystyrol-Perlpolymerisat 100 ml des aminomethylierten Perlpolymerisates werden auf dem Stampfvolumeter eingerüttelt und anschließend mit VE-Wasser (voll entsalztes Wasser) in eine Glassäule gespült. In 1 Stunde und 40 Minuten werden 1000 ml 2 gew.-%ige Natronlauge überfiltriert. Anschließend wird VE-Wasser überfiltriert bis 100 ml Eluat mit Phenolphthalein versetzt einen Verbrauch an 0,1 n (0,1 normaler) Salzsäure von höchstens 0,05 ml haben. 50 ml dieses Harzes werden in einem Becherglas mit 50 ml VE-Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert. Die Menge an Aminomethylgruppen in 1 Liter aminomethyliertem Harz errechnet sich nach folgender Formel: ( 200 - V ) · 20 = mol Aminomethylgruppen pro Liter Harz.

**Bestimmung der Menge an Methylpyridingruppen im Chelatharz**

50 ml feuchtes aminomethyliertes Perlpolymerisat werden im Trockenschrank bei 70°C im Vakuum bis zur Gewichtskonstanz getrocknet.

50 ml wiegen trocken 14,78 Gramm.

100 ml des Methylpyridingruppen tragenden Chelatharzes in der Sulfatform aus Beispiel 1d) werden in eine Säule gefüllt. Von oben werden 400 ml 4 gew. % ige wässrige Natronlauge überfiltriert. Anschließend werden von oben solange VE-Wasser zum Auswaschen der restlichen Natronlauge überfiltriert bis das Eluat einen pH Wert < 10 zeigt.

50 ml des so behandelten Harzes werden im Trockenschrank bei 70°C im Vakuum bis zur Gewichtskonstanz getrocknet.

50 ml wiegen trocken 18,47 Gramm.

Das Gesamttrockengewicht an aminomethyliertem Perlpolymerisat (300 ml) aus Beispiel 1c) beträgt 88,73 Gramm.

Das Gesamttrockengewicht an Methylpyridingruppen tragendem inertem Perlpolymerisat in der freien Basenform (555 ml) aus Beispiel 1d) beträgt 205,04 Gramm.

$$205,04 \text{ Gramm} - 88,73 \text{ Gramm} = 116,31 \text{ Gramm.}$$

Das Methylpyridingruppen tragende Harz aus Beispiel 1d) enthält 116,31 Gramm Methylpyridingruppen, entsprechend 1,264 mol Methylpyridin.

300 ml aminomethyliertes Perlpolymerisat aus Beispiel 1c) enthalten 300 x 2,17 = 651 mmol basische Gruppen.

Jede basische Aminomethylgruppe enthält zwei Wasserstoffatome, die durch Methylpyridingruppen ersetzt werden können.

$$1,264 / 0,651 = 1,94$$

Im statistischen Mittel sind von den zwei Wasserstoffatomen 1,94 durch Methylpyridingruppen ersetzt.

## Beispiele

## Beispiel 1

1a) Herstellung des monodispersen, makroporösen Perlpolymerisates auf der Basis von Styrol, Divinylbenzol und Ethylstyrol

In einem 10 1 Glasreaktor wurden 3000 g VE-Wasser vorgelegt und eine Lösung aus 10 g Gelatine, 16 g di-Natriumhydrogenphosphatdodekahydrat und 0,73 g Resorcin in 320 g VE- Wasser hinzugefüllt und durchmischt. Die Mischung wurde auf 25 °C temperiert. Unter Rühren wurde anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 460 μm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 μm-Sieb gewaschen und anschließend im Vakuum bei 80°C getrocknet. Man erhielt 1893 g eines kugelförmigen Polymerisates mit einer mittleren Teilchengröße von 440 μm, enger Teilchengrößenverteilung und glatter Oberfläche.

Das Polymerisat war in der Aufsicht kreidig weiß und wies eine Schüttdichte von ca. 370 g/l auf.

1b) Herstellung des amidomethylierten Perlpolymerisates

Bei Raumtemperatur wurden 1819 g Dichlorethan, 540,7 g Phthalimid und 373,65 g 30,1 gew.-%iges Formalin vorgelegt. Der pH Wert der Suspension wurde mit Natronlauge auf 5,5 bis 6 eingestellt. Anschließend wurde das Wasser destillativ entfernt. Dann wurden 39,6 g Schwefelsäure zudosiert. Das entstehende Wasser wurde destillativ entfernt. Der Ansatz wurde abgekühlt. Bei 30°C wurden 144,9 g 65 %iges Oleum und anschließend 371,4 g monodisperses Perlpolymerisat, hergestellt nach Verfahrensschritt 1a) eindosiert. Anschließend wurden weitere 1100 ml 1,2-Dichlorethan dosiert. Die Suspension wurde auf 70°C erhitzt und weitere 6,5 Stunden bei dieser Temperatur gerührt. Die Reaktionsbrühe wurde abgezogen, VE-Wasser wurde hinzudosiert und Restmengen an Dichlorethan wurden destillativ entfernt.

Ausbeute an amidomethyliertem Perlpolymerisat : 1860 ml

Elementaranalytische Zusammensetzung:

| | |
|---|---|
| Kohlenstoff: | 76,6 Gew. %; |
| Wasserstoff: | 4,9 Gew. %; |
| Stickstoff: | 5,5 Gew. %; |
| Rest: | Sauerstoff. |

1c) Herstellung des aminomethylierten Perlpolymerisates

Zu 1830 ml amidomethyliertem Perlpolymerisat aus Beispiel 1b) wurden 2496 g 17,4 gew.-%ige Natronlauge bei Raumtemperatur zudosiert. Die Suspension wurde auf 180°C erhitzt und 8 Stunden bei dieser Temperatur gerührt. Danach wurde auf Raumtemperatur abgekühlt. Das erhaltene Perlpolymerisat wurde mit VE-Wasser gewaschen.

Ausbeute an aminomethyliertem Perlpolymerisat : 1510 ml

Als Gesamtausbeute - hochgerechnet - ergeben sich 1535 ml

Elementaranalytische Zusammensetzung :

| | |
|---|---|
| Stickstoff: | 9,8 Gew. % |
| Kohlenstoff: | 80,1 Gew. % |
| Wasserstoff: | 8,1 Gew. % |
| Sauerstoff: | 2,5 Gew. % |
| HCl - Zahl: | 2,17 mol/ |

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,0 Wasserstoffatome durch Aminomethylgruppen substituiert wurden.

d) Herstellung des Methylpyridingruppen-tragenden Chelatharzes bei pH 7

Zu 200 ml VE-Wasser wurden bei Raumtemperatur 300 ml aminomethyliertes Perlpolymerisat aus Beispiel 1c) dosiert. Die Suspension wurde auf 70°C erhitzt. Anschließend wurden in 4 Stunden 293,6 g einer 80 gew.-%igen wässrigen Lösung an Picolylchloridhydrochlorid dosiert. Gleichzeitig wurde der pH Wert der Suspension bei pH 7 durch Dosierung von 50 gew.-%iger Natronlauge gehalten. Dann wurde weitere 6 Stunden bei dieser Temperatur gerührt.

Danach wurde die Suspension abgekühlt. Das Harz wurde mit VE-Wasser chloridfrei gewaschen.

Ausbeute: 555 ml

50 ml Harz getrocknet wogen 18,47 Gramm.

Im statistischen Mittel wurden von den zwei Wasserstoffatomen 1,94 durch Methylpyridingruppen ersetzt.

Das Harz wurde in eine Säule gefüllt und von oben mit 4000 ml 4 gew.-%iger Schwefelsäure beaufschlagt und in die Sulfatform überführt.

Harzvolumen : 675 ml

Totalkapazität des Harzes in der Sulfatform: 1,97 mol/l Harz

## Beispiel 2

### Herstellung des Methylpyridingruppen-tragenden Chelatharzes bei pH 8

Die Umsetzung erfolgte wie bei Beispiel 1c), nur dass bei pH 8 gearbeitet wurde.

Ausbeute: 545 ml

50 ml Harz getrocknet wogen 18,41 Gramm

Im statistischen Mittel wurden von den zwei Wasserstoffatomen 1,87 durch Methylpyridingruppen ersetzt.

Das Harz wurde in eine Säule gefüllt und von oben mit 4000 ml 4 gew.-%iger Schwefelsäure beaufschlagt und in die Sulfatform überführt.

Harzvolumen : 655 ml

Totalkapazität des Harzes in der Sulfatform: 1,956 mol/l Harz

## Beispiel 3

### Herstellung des Methylpyridingruppen-tragenden Chelatharzes bei pH 9

Die Umsetzung erfolgte wie bei Beispiel 1c), nur dass bei pH 9 gearbeitet wurde.

Ausbeute: 535 ml

50 ml Harz getrocknet wogen 18,34 Gramm

Im statistischen Mittel wurden von den zwei Wasserstoffatomen 1,80 durch Methylpyridingruppen ersetzt.

Das Harz wurde in eine Säule gefüllt und von oben mit 4000 ml 4 gew.-%iger Schwefelsäure beaufschlagt und in die Sulfatform überführt.

Harzvolumen : 645 ml

Totalkapazität des Harzes in der Sulfatform: 1,952 mol/l Harz

**Beispiel 4 (nicht erfindungsgemäß)**

**Herstellung des Methylpyridingruppen-tragenden Chelatharzes bei pH 10**

Die Umsetzung erfolgte wie bei Beispiel 1c), nur dass bei pH 10 gearbeitet wurde.

Ausbeute: 520 ml

50 ml Harz getrocknet wogen 18,13 Gramm

Im statistischen Mittel wurden von den zwei Wasserstoffatomen 1,67 durch Methylpyridingruppen ersetzt.

Das Harz wurde in eine Säule gefüllt und von oben mit 4000 ml 4 gew.-%iger Schwefelsäure beaufschlagt und in die Sulfatform überführt.

Harzvolumen : 640 ml

Totalkapazität des Harzes in der Sulfatform: 1,972 mol/l Harz

VE-Wasser im Sinne der vorliegenden Erfindung ist gekennzeichnet, indem es eine Leitfähigkeit von 0,1 bis 10 $\mu$S besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

**Beispiel 5**

In 250 ml einer Kupfersulfatlösung, die 0,99 Gramm Kupfer / Liter Lösung enthielt, und deren pH Wert auf pH 2 eingestellt war, wurden 10 ml Chelatharz aus Beispiel 1d) eingetragen. Die Suspension wurde 5 Stunden lang bei Raumtemperatur geschüttelt. Anschließend wurde in der Lösung der Restgehalt an Kupfer analysiert : 0,009 Gramm Kupfer / Liter Lösung.

**Beispiel 6 (nicht erfindungsgemäß)**

In 250 ml einer Kupfersulfatlösung, die 0,99 Gramm Kupfer / Liter Lösung enthielt, und deren pH-Wert auf pH 2 eingestellt war, wurden 10 ml Chelatharz DOW M 4195 eingetragen. Die Suspension wurde 5 Stunden lang bei Raumtemperatur geschüttelt. Anschließend wurde in der Lösung der Restgehalt an Kupfer analysiert : 0,09 Gramm Kupfer / Liter Lösung.

In den Beispielen 5 und 6 wird gezeigt, dass das erfindungsgemäß hergestellte Chelatharz mit Methylpyridingruppen deutlich schneller Kupferionen aus wässriger Lösung aufnimmt, als das marktgängige Produkt DOW M 4195, einem heterodispersen Chelatharz mit Picolylgruppen - siehe auch Tabelle 1.

Das erfindungsgemäß hergestellte Chelatharz zeigt außerdem ein günstigeres kinetisches Verhalten als DOW M 4195.

**Tabelle 1**

|  | Beispiel 5 | Beispiel 6 |
|---|---|---|
| Kupfergehalt in der Ausgangslösung 0,99 g / l | 0,99 | 0,99 |
| Kupfergehalt in der Lösung nach 5 stündigem Schütteln in g/l | 0,009 | 0,09 |

Tabelle 2 zeigt den Grad der Zweitsubstitution in Abhängigkeit vom pH Wert sowie die Steigerung der Ausbeute bei niedrigeren pH Werten während des Herstellprozesses.

**Tabelle 2**

| Beispiel | pH Wert der Reaktion | Ausbeute an Endprodukt | Zweitsubstitution |
|---|---|---|---|
| 1 | 7 | 555 | 1,94 |
| 2 | 8 | 545 | 1,87 |

(fortgesetzt)

| Beispiel | pH Wert der Reaktion | Ausbeute an Endprodukt | Zweitsubstitution |
|---|---|---|---|
| 3 | 9 | 535 | 1,80 |
| 4 | 10 | 520 | 1,67 |

**Patentansprüche**

1. Verfahren zur Herstellung monodisperser Chelatharze mit Aminomethylstickstoffheterocyclengruppen als funktionelle Gruppen **dadurch gekennzeichnet, dass** man

a) Monomertröpfchen aus wenigstens einer monovinylaromatischen Verbindung, wenigstens einer polyvinylaromatischen Verbindung und einem Initiator oder einer Initiatorkombination sowie gegebenenfalls einem Porogen zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt und
d) das aminomethylierte Perlpolymerisat zu Chelatharz mit Aminomethylstickstoffheterocyclengruppen als funktionelle Gruppen ohne Nachvernetzung umsetzt und bei der Umsetzung mit einem Halomethylstickstoffheterocyclus ein pH-Wert im Bereich 4 bis 9 eingehalten wird.

2. Verfahren gemäß Anspruch 1, **dadurch gekennzeichnet, dass** die Monomertröpfchen Porogene enthalten und nach der Polymerisation makroporöse, vernetzte Perlpolymerisate bilden.

3. Verfahren gemäß einem der Ansprüche 1 oder 2, **dadurch gekennzeichnet, dass** die Monomertröpfchen mit einem Komplexkoazervat mikroverkapselt werden.

4. Verfahren gemäß einem der Ansprüche 1 bis 3, **dadurch gekennzeichnet, dass** Verfahrensschritt a) in Gegenwart eines Schutzkolloids durchgeführt wird.

5. Verfahren gemäß einem der Ansprüche 1 bis 4, **dadurch gekennzeichnet, dass** als monovinylaromatische Verbindungen monoethylenisch ungesättigte Verbindungen eingesetzt werden.

6. Verfahren gemäß einem der Ansprüche 1 bis 5, **dadurch gekennzeichnet, dass** in Verfahrensschritt b) zunächst ein Phthalimidoether gebildet wird.

**Claims**

1. Process for producing monodisperse chelate resins having aminomethyl-nitrogen heterocyclic groups as functional groups, **characterized in that**

a) monomer droplets composed of at least one monovinylaromatic compound, at least one polyvinylaromatic compound and an initiator or an initiator combination, and optionally a porogen, are converted to a monodisperse, cross-linked bead polymer,
b) said monodisperse, cross-linked bead polymer is amidomethylated with phthalimide derivatives,
c) the amidomethylated bead polymer is converted to an aminomethylated bead polymer and
d) the aminomethylated bead polymer is converted to a chelate resin having aminomethyl-nitrogen heterocyclic groups as functional groups without subsequent crosslinking and a pH in the range of 4 to 9 is maintained during the reaction with a halomethyl-nitrogen heterocycle.

2. Process according to Claim 1, **characterized in that** the monomer droplets comprise porogens and macroporous, cross-linked bead polymers are formed after the polymerization.

3. Process according to either of Claims 1 and 2, **characterized in that** the monomer droplets are microencapsulated with a complex coacervate.

4. Process according to any of Claims 1 to 3, **characterized in that** process step a) is carried out in the presence of a protective colloid.

5. Process according to any of Claims 1 to 4, **characterized in that** the monovinylaromatic compounds used are monoethylenically unsaturated compounds.

6. Process according to any of Claims 1 to 5, **characterized in that** a phthalimidoether is initially formed in process step b).

## Revendications

1. Procédé de fabrication de résines de chélate monodispersées contenant des groupes hétérocycle aminométhylazoté en tant que groupes fonctionnels, **caractérisé en ce que**

   a) des gouttelettes de monomères constituées par au moins un composé monovinylaromatique, au moins un composé polyvinylaromatique et un initiateur ou une combinaison d'initiateurs, ainsi qu'éventuellement un porogène sont mises en réaction pour former un polymère en perles réticulé monodispersé,
   b) ce polymère en perles réticulé monodispersé est amidométhylé avec des dérivés de phtalimide,
   c) le polymère en perles amidométhylé est transformé en un polymère en perles aminométhylé, et
   d) le polymère en perles aminométhylé est transformé en une résine de chélate contenant des groupes hétérocycle aminométhylazoté en tant que groupes fonctionnels sans réticulation secondaire et, lors de la réaction avec un hétérocycle halométhylazoté, un pH dans la plage allant de 4 à 9 est maintenu.

2. Procédé selon la revendication 1, **caractérisé en ce que** les gouttelettes de monomères contiennent des porogènes et forment après la polymérisation des polymères en perles réticulés macroporeux.

3. Procédé selon l'une quelconque des revendications 1 ou 2, **caractérisé en ce que** les gouttelettes de monomères sont microencapsulées avec un coacervat complexe.

4. Procédé selon l'une quelconque des revendications 1 à 3, **caractérisé en ce que** l'étape de procédé a) est réalisée en présence d'un colloïde protecteur.

5. Procédé selon l'une quelconque des revendications 1 à 4, **caractérisé en ce que** des composés monoéthyléniquement insaturés sont utilisés en tant que composés monovinylaromatiques.

6. Procédé selon l'une quelconque des revendications 1 à 5, **caractérisé en ce qu'**un phtalimidoéther est tout d'abord formé à l'étape de procédé b).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4098867 A
- US 4031038 A
- EP 0481603 A
- EP 980711 A
- US 4444961 A
- EP 0046535 A
- US 4419245 A
- WO 9312167 A
- US 4382124 A

**In der Beschreibung aufgeführte Nicht-Patentliteratur**

- **R. HERING.** Chelatbildende Ionentauscher. Akademie Verlag, 1967, 150-157